# EUROPÄISCHE PATENTANMELDUNG

(11) **EP 2 108 588 A2**
(43) Veröffentlichungstag der Anmeldung: **14.10.2009**
(21) Anmeldenummer: 09153160.8
(22) Anmeldetag: 19.02.2009
(51) Int. Cl.: B65B 21/18

(54) **Verfahren und Vorrichtung zur Überprüfung von Greifelementen**

(30) Priorität: 20.02.2008 DE 102008010014
(71) Anmelder: Krones AG, 93073 Neutraubling (DE)
(72) Erfinder: Grimm, Volker, 93173 Wenzenbach (DE)
(74) Vertreter: Bittner, Bernhard

(57) **Zusammenfassung**

Ein Verfahren und eine Vorrichtung zum Überprüfen von Greifelementen für Behältnisse. Im Rahmen der Erfindung ist eine Vielzahl von Greifelementen zum Greifen einer Vielzahl von Behältnissen vorgesehen. Erfindungsgemäß werden Besetzungszustände dieser Greifelemente mit Behältnissen des Öfteren erfasst und eine Statistik über diese Besetzungszustände gebildet. Anhand dieser Statistik kann insbesondere ein Ausfall einzelner Greifelemente festgestellt und an den Benutzer gezielt ausgegeben werden.

## Beschreibung

Die vorliegende Erfindung bezieht sich auf ein Verfahren und eine Vorrichtung zum Überprüfen von Greifelementen für Behältnisse. Derartige Greifelemente für Behältnisse, welche auch als Greiftulpen bezeichnet werden, sind aus dem Stand der Technik seit langem bekannt. Diese dienen beispielsweise dazu, um Behältnisse wie insbesondere Flaschen in Kästen zu heben oder aus diesen Kästen herauszuheben. Dabei ist üblicherweise eine Vielzahl von derartigen Greifelementen vorgesehen, die beispielsweise eine Vielzahl von im Kasten angeordneten Flasche greifen und an eine andere Position versetzen. Dabei können derartige Vorrichtungen taktweise als Einpacker oder als Auspacker oder auch für kombinierte Anwendungen arbeiten. Beim Einpacken kommen die Behälter zunächst auf einem oder mehreren Behältertischen an und werden dort beispielsweise in Gassen umgelenkt, daraufhin werden sie von Greifelementen aufgenommen, in die Einpackposition gefahren und in bereitstehende Leergebinde gesetzt.

Bei diesen Pack- und Entpackvorgängen kann es jedoch zu unterschiedlichen Fehlern kommen, welche dazu führen, dass einzelne Behältnisse nicht gegriffen werden. Die Ursachen für derartige Ausfälle sind vielfältig, so kann es beispielsweise im Falle von Bügelverschlussflaschen zu einem Verhaken der Bügelverschlüsse an den Getränkekästen kommen oder auch das Behältnis kann derart beschädigt sein, dass es nicht ordnungsgemäß gegriffen werden kann. Eine weitere Fehlerquelle besteht darin, dass ein spezifisches Greifelement defekt ist und daher die entsprechende Flasche nicht gegriffen werden kann. Der vorliegenden Erfindung liegt die Aufgabe zugrunde, ein Verfahren und eine Vorrichtung zur Verfügung zu stellen, welche ein Auffinden einer spezifischen Fehlerquelle erleichtern.

Dies wird erfindungsgemäß durch ein Verfahren nach Anspruch 1 und eine Vorrichtung nach Anspruch 8 erreicht. Vorteilhafte Ausführungsformen und Weiterbildungen sind Gegenstand der Unteransprüche.

Bei einem erfindungsgemäßen Verfahren zum Überprüfen von Greifelementen wird in einem ersten Schritt eine erste Vielzahl von Behältnissen mit einer Vielzahl von Greifelementen gegriffen. In einem weiteren Schritt wird ein erster Besetzungszustand wenigstens eines der Greifelemente mit einem Behältnis aus der ersten Vielzahl von Behältnissen festgestellt. Bei einem weiteren Verfahrensschritt wird eine zweite Vielzahl von Behältnissen mit der Vielzahl von Greifelementen gegriffen und in einem weiteren Verfahrensschritt ein zweiter Besetzungszustand des wenigstens einen Greifelements mit einem Behältnis aus der zweiten Vielzahl von Behältnissen festgestellt. Schließlich werden der erste Besetzungszustand und der zweite Besetzungszustand des Greifelements mit einem Referenzwert bzw. einem Referenzzustand verglichen.

Bei der Vielzahl von Behältnissen kann es sich beispielsweise um eine vorgegebene Anzahl an Flaschen handeln, die anschließend in einen Flaschenkasten eingesetzt werden. Weiterhin kann es sich auch um eine Vielzahl von Flaschen handeln, die aus einem Flaschenkasten entnommen werden. Auch können mit entsprechend größer dimensionierten Anlagen mehrere Flaschen auf ganze Reihen von Kästen verteilt werden.

Unter einem Besetzungszustand der Greifelemente wird insbesondere eine Unterscheidung dahingehend verstanden, ob sich eine Flasche an dem Greifelement befindet oder nicht. Es wären jedoch auch andere Besetzungszustände denkbar, wie beispielsweise eine Überprüfung hinsichtlich einer exakten Ausrichtung der Behältnisse bezüglich der Greifelemente oder dergleichen. Durch den Vergleich der beiden Besetzungszustände des ein und desselben Greifelements mit dem Referenzwert kann auf mögliche Fehlerquellen geschlossen werden. So wäre es möglich, dass aus dem Fall, in dem beide Besetzungszustände jeweils anzeigen, dass das Greifelement keine Flasche hält, geschlossen wird, dass das entsprechende Greifelement defekt ist.

Bei dem Referenzwert kann es sich insbesondere um einen Soll - Besetzungszustand handeln, insbesondere einen besetzten Zustand. Damit wird bevorzugt festgestellt, ob ein bestimmtes Greifelement bei den betrachteten Greifvorgängen jeweils mit einem Behältnis besetzt ist oder war.

Falls beispielsweise ein Besetzungszustand anzeigt, dass ein Behältnis gehalten wurde und der andere anzeigt, dass kein Behältnis gehalten wurde, könnte dies darauf hindeuten, dass das Behältnis selbst defekt war oder aus einem anderen Grund nicht aus den Behältnis entnommen werden konnte, wie beispielsweise in Folge eines Verklemmens eines Bügelverschlusses.

Bei einem vorteilhaften Verfahren werden die ersten Besetzungszustände und die zweiten Besetzungszustände aller Greifelemente festgestellt. Auf diese Weise ist es möglich, eventuell defekte Greifelemente in einfacher Weise zu erkennen.

Bei einem weiteren vorteilhaften Verfahren wird wenigstens ein Besetzungszustand abgespeichert.

Bei einem weiteren vorteilhaften Verfahren wird ein dritter Besetzungszustand des Greifelements mit einem Behältnis aus einer dritten Vielzahl von Behältnissen festgestellt. Auch wäre es möglich, mehr als drei Besetzungszustände ein und desselben Greifelements festzustellen um auf diese Weise eine Statistik über diese Besetzungszustände zu bilden. Jedoch werden auch beim Bilden dieser Statistik die einzelnen Besetzungszustände festgestellt und gegeneinander vorteilhaft verglichen. Damit wird unter einem Vergleichen der Besetzungszustände im weiteren Sinne verstanden, dass mehrere Besetzungszustände gemeinsam, insbesondere im Rahmen einer Statistik, erfasst bzw. einander gegenübergestellt werden.

Vorteilhaft wird aus den Vergleichen zwischen dem ersten Besetzungszustand und dem zweiten Besetzungszustand mit dem Referenzzustand auf eine Funktionsfähigkeit des Greifelements geschlossen.

Bei einem weiteren vorteilhaften Verfahren, werden wie oben erwähnt, die Besetzungszustände wenigstens eines Greifelements, bevorzugt mehrerer Greifelemente und besonders bevorzugt aller Greifelemente statistisch erfasst. Vorteilhaft werden die unbesetzten Greifelemente festgestellt.

Bei einem weiteren bevorzugten Verfahren werden die Besetzungszustände ermittelt, nachdem die Greifelemente die Behältnisse freigegeben haben. So ist es beispielsweise möglich, mit Hilfe einer Kamera zu prüfen, ob eine bestimmte Position in einem Getränkekasten mit einem Behältnis besetzt ist. Ist dies nicht der Fall, kann geschlossen werden, dass dasjenige Greifelement, welches diese Position besetzen müsste, nicht mit einem Behältnis besetzt war. Vorzugsweise findet diese Messung jedoch kurz nach dem Einsetzen der Flaschen in die Getränkekästen statt, um auf diese Weise noch genau zuordnen zu können, welcher Greifergruppe das fehlerhafte Greifelement entstammte.

So ist es beispielsweise möglich, dass vier Gruppen von Greifelementen vorgesehen sind, welche jeweils vier hintereinander ankommende Kästen simultan mit Behältnissen befüllen. Nach der Befüllung werden die vollen Kästen weitertransportiert und die nächsten vier Kästen werden mit Behältnissen bestückt. Falls die Kästen unmittelbar oder zumindest zeitnah nach der Befüllung kontrolliert werden, ist es möglich auf ein bestimmtes Greifelement aus einer bestimmten Gruppe von Greifelementen rückzuschließen.

Die vorliegende Erfindung ist weiterhin auf eine Vorrichtung zum Überprüfen von Greifelementen für Behältnisse gerichtet, wobei diese Vorrichtung eine Vielzahl von Greifelementen zum Greifen einer Vielzahl von Behältnissen aufweist und wobei wenigstens ein Greifelement eine Sensoreinrichtung aufweist, welche einen Besetzungszustand dieses Greifelements mit einem Behältnis erfasst. Erfindungsgemäß weist die Vorrichtung eine Prozessoreinrichtung auf, welche derart gestaltet ist, dass sie einen ersten Besetzungszustand des Greifelements mit einem ersten Behältnis aus einer ersten Vielzahl von Behältnissen und einen zweiten Besetzungszustand mit einem zweiten Behältnis aus einer zweiten Vielzahl von Behältnissen mit einem Referenzzustand vergleicht.

Bei der Sensoreinrichtung kann es sich dabei um einen magnetischen Sensor oder auch andere Sensoreinrichtungen handeln. Auch kann eine Sensoreinrichtung vorgesehen sein, die beispielsweise einen Öffnungswinkel von Greifklauen oder dergleichen erfasst.

Es sind jedoch mehrere Arten der Prüfung möglich. Als Funktion ist das Greifen und Loslassen sowie die Rotation der Flasche gedacht. Man kann zusätzlich in jedem Packkopf einen Messwertaufnehmer anordnen, welcher den Widerstand beim Einpacken misst. Damit könnte man beispielsweise messen, ob die Flasche beim Einpacken aufsetzt. Durch ein Aufsetzten der Flasche ist ein höherer Verschleiß zu erwarten.
Als Ergebnis einer Funktionsprüfung wird ein digitaler Zustand (gut oder schlecht) oder ein analoger Wert gemessen. Es sind jedoch auch andere Vorgehensweisen zur Bestimmung von Besetzungszuständen möglich. Insbesondere kann die Sensoreinrichtung direkt an dem Greifelement vorgesehen sein.

Bei einer bevorzugten Ausführungsform ist die Prozessoreinrichtung derart ausgebildet, das sie die Besetzungszustände wenigstens eines Greifelementes statistisch auswertet. Durch diese statistische Auswertung kann beispielsweise eine Funktionsfähigkeit eines bestimmten Greifelements festgestellt werden. Vorzugsweise weist jedes Greifelement eine Sensoreinrichtung auf, welche einen Besetzungszustand dieser Greifelemente mit einem Behältnis erfasst. Auf diese Weise kann die oben erwähnte Statistik über alle Greifelemente gebildet werden und damit schnell ein defektes Greifwerkzeug aufgefunden werden.

Bei einer weiteren vorteilhaften Ausführungsform weist die Vorrichtung eine Sensoreinrichtung auf, welche nachträglich einen Besetzungszustand des Greifelements mit einem Behältnis erfasst. Nach dem Einpacken oder Auspacken der Behältnisse kann der Besetzungszustand bestimmt werden, indem man die Gebinde der Behältnisse prüft. Die Prüfung erfolgt insbesondere dahingehend, ob alle Behältnisse in der Kiste vorhanden oder entfernt sind. Diese Prüfung kann mit Kamera oder Sensoren durchgeführt werden. Auch ist die Prüfung noch möglich, nachdem die Gebinde sich schon einige Meter bewegt haben. Auch wäre es möglich, die Greifeinrichtung bzw. das Greifelement während des Ein- oder Auspackvorgangs mit einer Kamera zu beobachten um so die Funktion der Greifelemente zu überwachen.

Bei einer weiteren vorteilhaften Ausführungsform weist die Vorrichtung eine Speichereinrichtung auf, in der die Besetzungszustände des Greifelements ablegbar sind. Unter Verwendung dieser Speichereinrichtung können auch Historien von Bewegungsabläufen der Vorrichtung aufgenommen werden.

Vorzugsweise ist die Prozessoreinrichtung derart gestaltet, dass sie die Besetzungszustände aller Greifelemente mit den Behältnissen der ersten Vielzahl von Behältnissen mit den Besetzungszuständen aller Greifelemente mit Behältnissen der zweiten Vielzahl von Behältnissen vergleicht.

Vorzugsweise ist eine Anzeigeeinrichtung vorgesehen, welche die Besetzungszustände der einzelnen Greifelemente bzw. eine über diese Besetzungszustände gebildete Statistik an den Benutzer ausgibt. Auf diese Weise kann bei einer Vollkastenkontrolle eine Statistik geschaffen werden, bei der man für jedes Greifelemente eine eigene Statistik erhält. Anhand dieser Statistik kann der Bediener sofort ein eventuell defektes Greifelement erkennen. Diese Statistik wird bevorzugt mit Hilfe einer Anzeigeeinrichtung wie einem Display visualisiert.

Nach der Ermittlung der Funktion eines jeden Greifelements oder Teilen von Greifelementen stehen Messwerte über die Funktionen bereit. Die Auswertung ermittelt eine Statistik pro Greifelement und berechnet deren Fehler. Es kann die Anzahl der Fehler pro Packtulpe bzw. Greifelement gemessen werden bei analogen Werten auch der Mittelwert und die Verteilung (Gauß-Glocke).

Die erhobenen Werte können visualisiert werden, an den Ein- /Auspacker übermittelt werden oder an eine Betriebsdatenerfassung übermittelt werden. Die Erhebung der Daten erfolgt vorzugsweise entweder in einer oder mehreren dezentralen Steuerungen oder in der integrierten Steuerung der Maschine.

Daneben sind auch einfache, halbautomatische oder vollautomatische Rückkopplungen denkbar. Falls das System einen nicht tolerierbaren Fehler erkennt, kann es das Messsystem der Maschine anhalten und zur Fehlerbehebung auffordern. Auch wäre es im Rahmen der halbautomatischen Rückkopplung möglich, den Benutzer bei der Behebung des Fehlers zu unterstützen. So wäre es möglich, beispielsweise die als fehlerhaft erkannten Greifelemente gegenüber den übrigen auszufahren, einzufahren, rotieren zu lassen oder dergleichen oder aber auszukoppeln. Auch weitere Funktionen sind denkbar, welche dem Benutzer helfen, das fehlerhafte Greifelement schneller aufzufinden.

Schließlich wäre es auch denkbar, dass die Maschine selbsttätig ein Auswechseln als fehlerhaft erkannter Greifelemente vornimmt.

Weitere Vorteile und Ausführungsformen ergeben sich aus den beigefügten Zeichnungen:

Darin zeigen:
- Fig. 1: eine schematische Darstellung einer Vorrichtung zum Greifen von Behältnissen; und
- Fig. 2: eine schematische Darstellung einer Anzeige für die einzelnen Greifelemente.

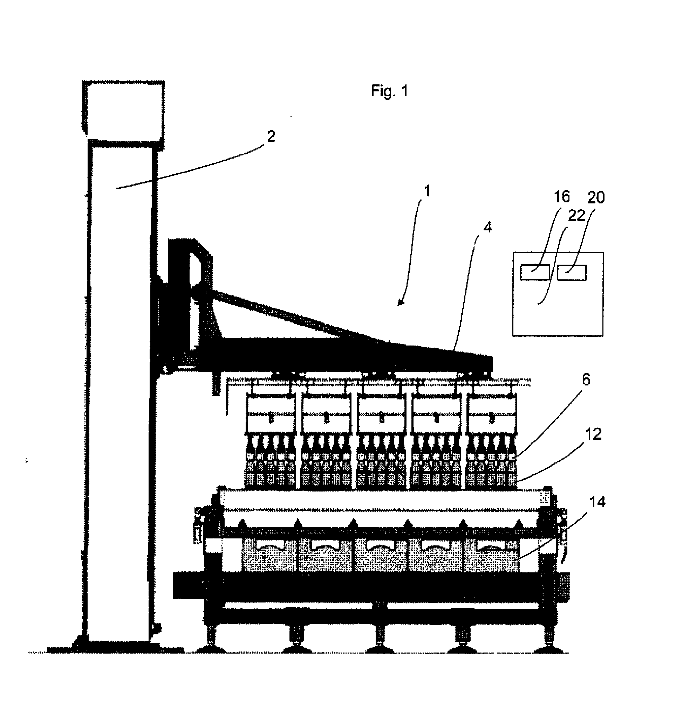

Figur 1 zeigt eine Vorrichtung 1 zum Transportieren von Behältnissen. Diese Vorrichtung 1 weist eine Hubsäule 2 auf, an der ein Greiferkopfträger 4 angeordnet ist. Damit ist dieser Greiferkopfträger 4 in Figur 1 in einer vertikalen Richtung beweglich. Weiterhin ist eine Horizontalachse vorgesehen, um den Greiferkopfträger 4 in der horizontalen Richtung hier senkrecht zur Blattebene bewegen zu können. An dem Greiferkopfträger 4 ist eine Vielzahl von Greifelementen 6 vorgesehen, welche jeweils eine (nicht dargestellte) Sensoreinrichtung aufweisen, welche einen Besetzungszustand des jeweiligen Greifelements 6 mit einem Behältnis 12 feststellen können. Mit dieser Vielzahl von Greifelementen 6 können die Behältnisse 12 in Getränkekästen 14 eingesetzt werden bzw. aus diesen entnommen werden.

Die einzelnen Sensoreinrichtungen geben ein für einen Besetzungszustand des jeweiligen Greifelements 6 charakteristisches Signal an eine Prozessoreinrichtung 16 aus. Die gesamte Vorrichtung 1 führt mehrere entsprechende Arbeitsgänge hintereinander durch, beispielsweise einen Transport einer Vielzahl von Flaschen 12 aus den Getränkekästen 14 heraus oder in diese Getränkekästen 14 hinein. Über mehrere solche Arbeitsgänge werden Statistiken über die Besetzungszustände der einzelnen Greifelemente 6 gebildet. Dabei werden diese einzelnen Besetzungszustände auch in einer Speichereinrichtung 20 abgespeichert. Das Bezugszeichen 22 bezieht sich auf einen Anzeigeeinrichtung für die Besetzungzustände bzw. für diese Besetzungszustände repräsentierende statistische Werte.

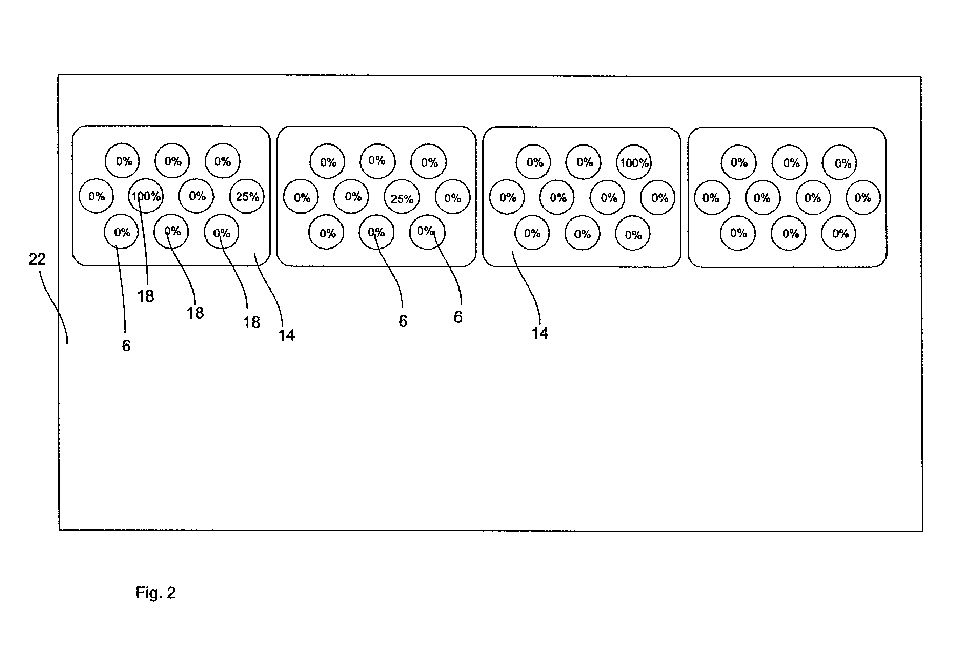

Figur 2 zeigt eine Möglichkeit für eine Anzeige der Besetzungszustände. Dabei ist hier ein so genannter Viererlinearpacker visualisiert, der zum Einpacken von Behältnissen in vier Getränkekästen dient. Das Bezugszeichen 4 bezieht sich auch hier wieder auf eine Veranschaulichung der Greifelemente und die angegebenen Zahlenwerte 18, beispielsweise kennzeichnen 0 % eine (statistische) Ausfallquote des einzelnen Greifelements 6. Man erkennt hier, dass beispielsweise im linken Kasten 14 die meisten Statistiken den Wert 0 % aufweisen, das bedeutet, dass hier keine Ausfallquote vorliegt und damit die Greifelementen stets mit Behältnissen bestückt waren. Die Gesamtheit der von den in Fig. 2 gezeigten Greifelemente gegriffenen Behältnissen 12 stellt damit die oben beschriebene Vielzahl von Behältnissen dar.

Bei einem Greifelement wird ein Ausfall von 100 % angezeigt, was bedeutet, dass hier zu keinem Zeitpunkt ein Behältnis gegriffen wurde. Dies deutet auf ein fehlerhaftes Greifelement hin, so dass der Benutzer schnell erkennen kann, dass in der zweiten Reihe der Greifelemente das zweite von links angeordnete Greifelement defekt ist. Das in der zweiten Reihe rechts angeordnete Greifelement weist einen Ausfall von 25 % auf. Falls beispielsweise die Statistik hier über vier Bearbeitungsgänge gebildet wurde, bedeutet dies, dass einmal kein Behältnis erfasst wurde. Dies deutet darauf hin, dass das Greifelement selbst wohl intakt ist, aber aus anderen Gründen einmal kein Behältnis erfasst werden konnte, beispielsweise weil sich dieses gegenüber den Getränkekästen verhakt hat. Damit kann über die Anzeigeeinrichtung eine Statisitik über die einzelnen Besetzungszustände der einzelnen Greifelemente 6 ausgegeben werden. Darüber hinaus wäre es möglich, diejenigen Greifelemente, welche (mit hoher Wahrscheinlichkeit) defekt sind, zu kennzeichnen.

In der Anzeigeeinrichtung 22 können aber auch andere relevante Daten ausgegeben werden, beispielsweise eine Angabe über die gerade behandelte Getränkesorte, über die Gesamtausleitung oder die Sortenproduktion. Zusätzlich können auch Statistiken oder Messwerte gedruckt, als Sprache ausgegeben oder aber über Funk ermittelt werden.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Verfahren zum Überprüfen von Greifelementen (6) für Behältnisse (12) mit den
Schritten:
- Greifen einer ersten Vielzahl von Behältnissen (12) mit einer Vielzahl von Greifelementen (6);
- Greifen einer zweiten Vielzahl von Behältnissen (12) mit der Vielzahl von Greifelementen (6);
- Feststellen eines ersten Besetzungszustands wenigstens eines der Greifelemente (6) mit einem Behältnis aus der ersten Vielzahl von Behältnissen (12);
- Feststellen eines zweiten Besetzungszustands des wenigstens einen Greifelements (6) mit einem Behältnis (12) aus der zweiten Vielzahl von Behältnissen (12); und
- Vergleichen des ersten Besetzungszustands und des zweiten Besetzungszustands des Greifelements (6) mit einem Referenzzustand.

2. Verfahren nach Anspruch **dadurch gekennzeichnet, dass** die ersten Besetzungszustände und die zweiten Besetzungszustände aller Greifelemente (12) festgestellt werden.

3. Verfahren nach wenigstens einem der vorangegangenen Ansprüche, **dadurch gekennzeichnet, dass** wenigstens ein Besetzungszustand abgespeichert wird.

4. Verfahren nach wenigstens einem der vorangegangenen Ansprüche, **dadurch gekennzeichnet, dass** wenigstens ein dritter Besetzungszustand des Greifelements (6) mit einem Behältnis (12) aus einer dritten Vielzahl von Behältnissen (12) festgestellt wird.

5. Verfahren nach wenigstens einem der vorangegangenen Ansprüche, **dadurch gekennzeichnet, dass** aus dem Vergleich zwischen dem ersten Bestzungszustand und dem zweiten Besetzungszustand einerseits und dem Referenzzustand auf eine Funktionsfähigkeit des Greifelements (6) geschlossen wird.

6. Verfahren nach wenigstens einem der vorangegangenen Ansprüche, **dadurch gekennzeichnet, dass** die Besetzungszustände wenigstens eines Greifelements (6) statistisch erfasst werden.

7. Verfahren nach wenigstens einem der vorangegangenen Ansprüche, **dadurch gekennzeichnet, dass** die unbesetzten Greifelemente (6) festgestellt werden.

8. Verfahren nach wenigstens einem der vorangegangenen Ansprüche, **dadurch gekennzeichnet, dass** die Besetzungszustände ermittelt werden, nachdem die Greifelemente (6) die Behältnisse freigegeben haben.

9. Vorrichtung zum Überprüfen von Greifelementen (6) für Behältnisse (12) mit einer Vielzahl von Greifelementen (6) zum Greifen einer Vielzahl von Behältnissen (12), wobei wenigstens ein Greifelement (6) eine Sensoreinrichtung aufweist, welche einen Besetzungszustand dieses Greifelements (6) mit einem Behältnis (12) erfasst, **dadurch gekennzeichnet, dass** die Vorrichtung eine Prozessoreinrichtung (16) aufweist, welche derart gestaltet ist, dass sie einen ersten Besetzungszustand des Greifelements (6) mit einem ersten Behältnis (12) aus einer ersten Vielzahl von Behältnissen (12) und einen zweiten Besetzungszustand mit einem zweiten Behältnis (12) aus einer zweiten Vielzahl von Behältnissen (12) mit einem Referenzzustand vergleicht.

10. Vorrichtung nach Anspruch 8, **dadurch gekennzeichnet, dass** die Prozessoreinrichtung (16) derart ausgebildet ist, dass sie die Besetzungszustände wenigstens eines Greifelements (6) statistisch auswertet.

11. Vorrichtung nach Anspruch 7, **dadurch gekennzeichnet, dass** jedes Greifelement (6) eine Sensoreinrichtung aufweist, welche einen Besetzungszustand dieses Greifelements (6) mit einem Behältnis (12) erfasst.

12. Vorrichtung nach Anspruch 7, **dadurch gekennzeichnet, dass**, die Vorrichtung eine Sensoreinrichtung aufweist, welche nachträglich einen Besetzungszustand des Greifelements (6) mit einem Behältnis erfasst.

13. Vorrichtung nach wenigstens einem der vorangegangenen Ansprüche 7 - 8, **dadurch gekennzeichnet, dass** die Vorrichtung eine Speichereinrichtung (20) aufweist, in der die Besetzungszustände der Greifelemente (6) ablegbar sind.

14. Vorrichtung nach wenigstens einem der vorangegangenen Ansprüche 7 - 9, **dadurch gekennzeichnet, dass** die Prozessoreinrichtung (16)derart gestaltet ist, dass sie die Besetzungszustände aller Greifelemente (6) mit Behältnissen (12) der ersten Vielzahl von Behältnissen (12) und die Besetzungszustände aller Greifelemente (6) mit Behältnissen (12) der zweiten Vielzahl von Behältnissen (12) mit Referenzzuständen vergleicht.
